# EUROPÄISCHE PATENTSCHRIFT

(11) **EP 3 502 039 B1**
(45) Veröffentlichungstag und Bekanntmachung des Hinweises auf die Patenterteilung: **23.08.2023**
(21) Anmeldenummer: 18210610.4
(22) Anmeldetag: 06.12.2018
(51) Int. Cl.: B66F 9/065, B66F 9/075, B62D 33/06, B62D 51/02, B60N 2/24, B62D 24/04

(54) **FLURFÖRDERZEUG MIT EINEM EINE FAHRERSTANDPLATTFORM UMFASSENDEN FAHRERARBEITSPLATZ**
INDUSTRIAL TRUCK WITH A DRIVER'S PLATFORM CONTAINING DRIVER STATION
CHARIOT DE MANUTENTION DOTÉ D'UN POSTE DE TRAVAIL DE CONDUCTEUR COMPRENANT UNE PLATEFORME SUPPORT DE CONDUCTEUR

(30) Priorität: 21.12.2017 DE 102017130915; 20.04.2018 DE 102018109551
(43) Veröffentlichungstag der Anmeldung: 26.06.2019
(73) Patentinhaber: STILL S.p.A., 20020 Lainate (MI) (IT)
(72) Erfinder: MARIOTTI, Fabio, 42016 Guastalla RE (IT); BORSARI, Luca, 46024 Moglia (IT)
(74) Vertreter: Patentship Patentanwaltgesellschaft

(56) Entgegenhaltungen:
- EP-A1- 3 176 125
- EP-A2- 1 375 411
- WO-A2-2006/118925

## Beschreibung

Die Erfindung betrifft ein Flurförderzeug mit einem Fahrerarbeitsplatz, der von einer Fahrerstandplattform für eine stehende Bedienperson gebildet ist und an einem Antriebsteil des Flurförderzeugs in Längsrichtung des Flurförderzeugs zwischen einem Batteriefach einer Traktionsbatterie und einer vertikalen Rückwand des Antriebsteils angeordnet ist, wobei die Fahrerstandplattform mittels einer Aufhängung an dem Antriebsteil in vertikaler Richtung bewegbar aufgehängt ist und mittels einer Feder-Dämpfereinrichtung an dem Antriebsteil gefedert und gedämpft abgestützt ist, wobei oberhalb der Fahrerstandplattform eine Fahrerarbeitsplatzkomponente in vertikaler Richtung bewegbar an dem Antriebsteil aufgehängt ist, wobei ein Koppelgetriebe vorgesehen ist, das die Fahrerarbeitsplatzkomponente mit der Aufhängung der Fahrerstandplattform derart verbindet, dass die Vertikalbewegung der Fahrerstandplattform und die Vertikalbewegung der Fahrerarbeitsplatzkomponente gekoppelt ist.

Ein gattungsgemäßes Flurförderzeug ist aus der EP 3 176 125 A1 bekannt.

Bei Flurförderzeugen mit einem eine Fahrerstandplattform aufweisenden Fahrerstand werden von einer auf der Fahrerstandplattform stehenden Bedienperson bedient. Bei derartigen Flurförderzeugen ist es gewünscht, die Fahrerstandplattform über eine Feder-Dämpfereinrichtung an dem Antriebsteil aufzuhängen, um durch eine gefederte und gedämpfte Aufhängung der Fahrerstandplattform am Antriebsteil die auf die Bedienperson, die auf der Fahrerstandplattform steht, einwirkenden Schwingungen und Vibrationen im Betrieb des Flurförderzeugs mittels der Feder-Dämpfereinrichtung zu reduzieren, beispielsweise wenn mit dem Flurförderzeug über Bodenunebenheiten gefahren wird. Die mittels der Feder-Dämpfereinrichtung gefederte und gedämpfte Fahrerstandplattform reduziert jedoch die auf die Bedienperson einwirkenden Schwingungen und Vibrationen nur, wenn die Bedienperson auf der Fahrerstandplattform steht. Sofern ein Flurförderzeug mit einer Fahrerstandplattform weiterhin mit einer Rückenlehne versehen ist, an der sich die auf dem Fahrerarbeitsplatz befindliche Bedienperson anlehnen kann, und/oder einem Fahrersitz versehen ist, auf den sich die im Fahrerarbeitsplatz befindliche Bedienperson setzen kann, ist es erforderlich, auch die Rückenlehne und/oder den Fahrersitz mittels einer Feder-Dämpfereinrichtung gefedert und gedämpft am Antriebsteil anzuordnen, um auch dann, wenn die Bedienperson in sitzender Position auf dem Fahrersitz das Flurförderzeug bedient, die auf die auf dem Fahrersitz sitzende Bedienperson einwirkenden Schwingungen und Vibrationen im Betrieb des Flurförderzeugs zu reduzieren.

Hierzu könnte die Rückenlehne und/oder der Fahrersitz mit einer eigenen Feder-Dämpfereinrichtung versehen werden. Dabei ist es jedoch nachteilig, dass eine erste Feder-Dämpfereinrichtung für die Fahrerstandplattform und zweite Feder-Dämpfereinrichtung für die Rückenlehne und/oder den Fahrersitz erforderlich ist, was den Bauaufwand des Flurförderzeugs erhöht und einen entsprechenden Bauraum benötigt.

Weiterhin könnte die Rückenlehne und/oder der Fahrersitz direkt und starr mit der Fahrerstandplattform verbunden werden, beispielsweise an einem Ende der Fahrerstandplattform, so dass nur eine Feder-Dämpfereinrichtung für die die Fahrerstandplattform, die Rückenlehne und/oder den Fahrersitz erforderlich ist. Bei einer direkten und starren Verbindung der Rückenlehne und/oder des Fahrersitzes mit der Fahrerstandplattform ist jedoch nachteilig, dass hohe Verformungen an der Fahrerstandplattform auftreten, die daraus resultieren, dass auf die Fahrerstandplattform hohe Kräfte von der Rückenlehne und/oder vom Fahrersitz kommend eingeleitet werden, wenn sich die Bedienperson an der Rückenlehne anlehnt und/oder auf dem Fahrersitz sitzt, da das Gewicht der Bedienperson ungünstig an einem Ende der Fahrerstandplattform eingeleitet wird und auf die Fahrerstandplattform dynamische Effekte und Kräfte von der Rückenlehne und/oder vom Fahrersitz eingeleitet werden. Diese auf die Fahrerstandplattform einwirkenden Kräfte, die von der Rückenlehne und/oder vom Fahrersitz kommen, wenn sich die Bedienperson an der Rückenlehne anlehnt und/oder auf dem Fahrersitz sitzt, können zu einer Beschädigung der Fahrerstandplattform und/oder zu einer Blockierung der Bauteile der gefederten und gedämpften Aufhängung der Fahrerstandplattform am Antriebsteil führen.

Aus der EP 1 375 411 A2 ist ein als Schubmaststapler ausgebildetes Flurförderzeug bekannt, bei dem ein Fahrerarbeitsplatz, der eine Bodenplatte und einen Fahrersitz umfasst, an einem Zwischenrahmen befestigt sind, der relativ zu dem Fahrzeugrahmen des Flurförderzeugs in vertikaler Richtung beweglich gelagert ist und an dem Fahrzeugrahmen gefedert aufgehängt ist. Der Fahrersitz kann weiterhin an dem Zwischenrahmen gefedert gelagert sein.

Der vorliegenden Erfindung liegt die Aufgabe zugrunde, ein Flurförderzeug der eingangs genannten Gattung zur Verfügung zu stellen, das eine gefederte und gedämpfte Aufhängung der Fahrerstandplattform und einer weiteren Fahrerarbeitsplatzkomponente bei geringem Bauaufwand ermöglicht, ohne zu hohen von der Fahrerarbeitsplatzkomponente auf die Fahrerstandplattform einwirkenden Kräften zu führen.

Diese Aufgabe wird erfindungsgemäß dadurch gelöst, dass das Koppelgetriebe einen Hebel umfasst, der an einem ersten Verbindungspunkt an dem Antriebsteil um eine Querachse schwenkbar gelagert ist und an einem zweiten Verbindungspunkt mit der Aufhängung gelenkig verbunden ist, und eine mit der Fahrerarbeitsplatzkomponente in Verbindung stehende Verbindungsstange, die an einem dritten Verbindungspunkt mit dem Hebel gelenkig verbunden ist. Bei der Erfindung ist somit die Fahrerstandplattform mit der Fahrerarbeitsplatzkomponente über ein Koppelgetriebe gekoppelt, so dass für die gefederte und gedämpfte Aufhängung der Fahrerarbeitsplatzkomponente die für die gefederte und gedämpfte Aufhängung der Fahrerstandplattform vorhandene Feder-Dämpfereinrichtung genutzt wird. Dies führt zu einem geringen Bauaufwand, da für die gedämpfte Aufhängung der Fahrerstandplattform und der Fahrerarbeitsplatzkomponente nur eine einzige Feder-Dämpfereinrichtung an der Fahrerstandplattform erforderlich ist. Anstelle einer direkten und starren Verbindung der Fahrerarbeitsplatzkomponente mit der Fahrerstandplattform ist erfindungsgemäß ein Koppelgetriebe vorgesehen, das die Fahrerarbeitsplatzkomponente mit der Aufhängung der Fahrerstandplattform verbindet, um die Vertikalbewegung der Fahrerstandplattform und die Vertikalbewegung der Fahrerarbeitsplatzkomponente zu koppeln. Die Kräfte, die von der Fahrerarbeitsplatzkomponente kommen, werden somit nicht auf die Fahrerstandplattform übertragen, sondern von dem Koppelgetriebe aufgenommen und abgestützt, so dass keine Gefahr der Beschädigung der Fahrerstandplattform und/oder der Gefahr des Blockierens der Bauteile der gefederten und gedämpften Aufhängung der Fahrerstandplattform am Antriebsteil besteht. Erfindungsgemäß umfasst das Koppelgetriebe eine Verbindungsstange, die mit der Fahrerarbeitsplatzkomponente verbunden ist, und einen Hebel, der am Antriebsteil schwenkbar gelagert ist und mit der Aufhängung der Fahrerstandplattform sowie der Verbindungsstange gelenkig verbunden ist. Der Hebel stellt somit ein Verbindungselement zwischen der Aufhängung der Fahrerstandplattform und der Verbindungsstange dar. Mit einem derartigen Koppelgetriebe ist es auf einfache Weise und mit geringem Bauaufwand möglich, die Vertikalbewegung der Fahrerstandplattform und die Vertikalbewegung der Fahrerarbeitsplatzkomponente zu koppeln ohne die Fahrerarbeitsplatzkomponente direkt mit der Fahrerstandplattform zu verbinden. Die Kräfte, die von der Fahrerarbeitsplatzkomponente kommen, werden somit nicht auf die Fahrerstandplattform übertragen, sondern von dem Koppelgetriebe aufgenommen und über den Hebel und die Aufhängung im Antriebsteil abgestützt.

Gemäß einer vorteilhaften Ausgestaltungsform der Erfindung ist die Aufhängung der Fahrerstandplattform als Parallelogrammaufhängung ausgebildet, die einen ersten Lenker aufweist, der an einer ersten Gelenkverbindung mit dem Antriebsteil und an einer zweiten Gelenkverbindung mit der Fahrerstandplattform gelenkig verbunden ist, und einen zweiten Lenker aufweist, der an einer dritten Gelenkverbindung mit dem Antriebsteil und an einer vierten Gelenkverbindung mit der Fahrerstandplattform gelenkig verbunden ist, wobei die erste Gelenkverbindung und die dritte Gelenkverbindung an dem Antriebsteil um einen horizontalen Abstand und einen vertikalen Abstand voneinander beabstandet angeordnet sind und wobei die zweite Gelenkverbindung und die vierte Gelenkverbindung an der Fahrerstandplattform um im Wesentlichen denselben horizontalen Abstand und im Wesentlichen denselben vertikalen Abstand voneinander beabstandet angeordnet sind. Die Ausbildung der Aufhängung der Fahrerstandplattform als Parallelogrammaufhängung mit zwei Lenkern ermöglicht bei geringem Bauaufwand eine reine vertikale bzw. im Wesentlichen vertikale Bewegung der Fahrerstandplattform, wobei die Fahrerstandplattform über den gesamten Hubbereich stets im Wesentlichen horizontal ausgerichtet ist, so dass die Vertikalbewegung der Fahrerstandplattform auf einfache Weise mit der Vertikalbewegung der Fahrerarbeitsplatzkomponente gekoppelt werden kann.

Gemäß einer vorteilhaften Ausgestaltungsform der Erfindung ist der Hebel des Koppelgetriebes mit einem der beiden Lenker, insbesondere mit dem zweiten Lenker, der Parallelogrammaufhängung gelenkig verbunden. Hierdurch kann das Koppelgetriebe auf einfache Weise mit der Aufhängung der Fahrerstandplattform verbunden werden. Die von der Fahrerarbeitsplatzkomponente kommenden Kräfte werden somit einerseits über den Hebel und dessen Querachse in den Antriebsteil eingeleitet und andererseits über den Lenker der Aufhängung der Fahrerstandplattform und dessen Gelenkverbindung in den Antriebsteil eingeleitet, so dass die Fahrerstandplattform in der Bewegung mit der Fahrerarbeitsplatzkomponente gekoppelt ist, jedoch nicht von den von der Fahrerarbeitsplatzkomponente kommenden Kräften beaufschlagt ist.

Besondere Vorteile ergeben sich, wenn gemäß einer bevorzugten Ausführungsform der Erfindung das Koppelgetriebe derart ausgebildet ist, dass die Fahrerarbeitsplatzkomponente und die Fahrerstandplattform synchronisiert sind. Sofern die Fahrerarbeitsplatzkomponente und die Fahrerstandplattform synchronisiert sind, weisen die Fahrerarbeitsplatzkomponente und die Fahrerstandplattform eine Vertikalbewegung mit derselben Verschiebung und derselben Geschwindigkeit auf. Dies führt zu einem hohen Komfort für die auf der Fahrerstandplattform befindliche und mit der Fahrerarbeitsplatzkomponente in Kontakt stehende Bedienperson, wenn mit dem Flurförderzeug über Bodenunebenheiten gefahren wird.

Eine Synchronisation der Fahrerarbeitsplatzkomponente und der Fahrerstandplattform ist auf einfache Weise möglich, wenn der dritte Verbindungspunkt zwischen der Querachse und dem zweiten Verbindungspunkt angeordnet ist.

Gemäß einer Weiterbildung der Erfindung ist die Verbindungsstange im Bereich der Verbindung mit der Fahrerarbeitsplatzkomponente an einer vertikalen Linearführung geführt. Mit einer vertikalen Linearführung kann auf einfache Weise die Verbindungsstange in Position gehalten werden und erzielt werden, dass ausschließlich vertikale Kräfte von der Fahrerarbeitsplatzkomponente auf die Verbindungsstange übertragen werden.

Gemäß einer vorteilhafte Ausgestaltungsform der Erfindung ist die Fahrerarbeitsplatzkomponente als Abdeckung, insbesondere als Abdeckung des Batteriefachs, ausgebildet ist, an der ein Bedienlenker des Flurförderzeugs angeordnet ist. Mit dem Koppelgetriebe kann auf einfache Weise die Fahrerstandplattform und eine mit einem Bedienlenker versehene Abdeckung, wobei der Bedienlenker von der auf der Fahrerstandplattform stehenden Bedienperson bedient wird, gekoppelt werden, um eine gleiche Vertikalbewegung mit derselben Verschiebung und derselben Geschwindigkeit an dem Bedienlenker und der Fahrerstandplattform zu erzielen, ohne die Abdeckung bzw. den Bedienlenker direkt mit der Fahrerstandplattform verbinden zu müssen.

Gemäß einer alternativen und ebenfalls vorteilhaften Ausgestaltungsform der Erfindung ist die Fahrerarbeitsplatzkomponente als Rückenlehne ausgebildet ist, die an der vertikalen Rückwand des Antriebsteils vertikal bewegbar angeordnet ist. Mit dem Koppelgetriebe kann auf einfache Weise die Fahrerstandplattform und eine vertikal bewegbare Rückenlehne, an der sich die Bedienperson im Betrieb des Flurförderzeugs anlehnen kann, gekoppelt werden, um eine gleiche Vertikalbewegung mit derselben Verschiebung und derselben Geschwindigkeit an der Rückenlehne und der Fahrerstandplattform zu erzielen, ohne die Rückenlehne direkt mit der Fahrerstandplattform verbinden zu müssen. Die Kräfte, die von der Rückenlehne kommen, werden somit nicht auf die Fahrerstandplattform übertragen, sondern von dem Koppelgetriebe aufgenommen und über den Hebel und die Aufhängung im Antriebsteil abgestützt.

Gemäß einer vorteilhaften Weiterbildung der Erfindung ist die Rückenlehne mit einem Fahrersitz, insbesondere einem Klappsitz, versehen. Wenn die Bedienperson auf dem Fahrersitz sitzt, wird somit das Gewicht der Bedienperson nicht in die Fahrerstandplattform eingeleitet, sondern von dem Koppelgetriebe aufgenommen und über den Hebel und die Aufhängung der Fahrerstandplattform im Antriebsteil abgestützt, so dass keine Gefahr der Beschädigung der Fahrerstandplattform und/oder der Gefahr des Blockierens der Bauteile der gefederten und gedämpften Aufhängung der Fahrerstandplattform am Antriebsteil besteht.

Bei der Erfindung ist es zudem auf einfache Weise möglich, dass der Fahrersitz an der Rückenlehne in vertikaler Richtung höhenverstellbar angeordnet ist. Dies ermöglicht eine einfache Anpassung und Einstellung der Sitzhöhe an die Körpergröße der Bedienperson.

Gemäß einer Weiterbildung der Erfindung ist ein Anwesenheitssensor vorgesehen, der eine auf der Fahrerstandplattform befindliche Bedienperson erfasst, wobei der Anwesenheitssensor von der Aufhängung der Fahrerstandplattform betätigt ist. Bei Flurförderzeugen des Standes der Technik, die eine Fahrerstandplattform und einen Fahrersitz, beispielsweise einen Klappsitz, aufweisen, ist es erforderlich, einen ersten Anwesenheitssensor vorzusehen, der an der Fahrerstandplattform angeordnet ist oder von der Fahrerstandplattform betätigt wird, um eine auf der Fahrerstandplattform stehenden Bedienperson zu ermitteln, und einen zweiten Anwesenheitssensor vorzusehen, der an dem Fahrersitz angeordnet ist oder von dem Fahrersitz betätigt wird, um eine auf dem Fahrersitz sitzende Bedienperson zu ermitteln, sofern die auf dem Fahrersitz sitzende Bedienperson die Fahrerstandplattform nicht belastet und somit der erste Anwesenheitssensor nicht betätigt ist. Aufgrund der zwei Anwesenheitssensoren weist ein Flurförderzeug des Standes der Technik einen hohen Bauaufwand, eine hohe Komplexität und die Gefahr auf, die Anwesenheit der Bedienperson nicht korrekt zu ermitteln. Bei dem erfindungsgemäßen Flurförderzeug ist es ausreichend, nur einen einzigen Anwesenheitssensor vorzusehen, der von der Aufhängung der Fahrerstandplattform betätigt ist, um eine auf der Fahrerstandplattform stehende oder eine auf dem Fahrersitz sitzende Bedienperson korrekt zu ermitteln, da die vertikale Bewegung der mit dem Fahrersitz versehenen Rückenlehne zu einer vertikalen Bewegung der Fahrerstandplattform und somit zu einer Betätigung des Anwesenheitssensors führt. Es ist somit kein zweiter Anwesenheitssensor an dem Fahrersitz erforderlich.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer perspektivischen Darstellung,
- Figur 2: einen Ausschnitt der Figur 1 in einer perspektivischen Darstellung,
- Figur 3: eine Seitenansicht der Figur 2,
- Figur 4: die Fahrerstandplattform des erfindungsgemäßen Flurförderzeugs in einer perspektivischen Darstellung,
- Figur 5: eine Seitenansicht der Figur 4,
- Figur 6: die Bauteile der Fahrerstandplattform in einer Explosionsdarstellung,
- Figur 7: eine Darstellung gemäß der Figur 3 mit zusätzlichen Abdeckungen,
- Figur 8: einen Schnitt entlang der Linie A-A der Figur 5,
- Figur 9: einen Ausschnitt der Figur 2 mit zusätzlicher Darstellung eines erfindungsgemäßen Koppelgetriebes,
- Figur 10: einen Ausschnitt der Figur 2 mit zusätzlicher Darstellung einer vertikal verstellbaren Rückenlehne,
- Figur 11: die Figur 9 in einer Seitenansicht und in der oberen Endstellung befindlicher Fahrerstandplattform,
- Figur 12: die Figur 9 in einer Seitenansicht und in der unteren Endstellung befindlicher Fahrerstandplattform,
- Figur 13: einen Ausschnitt der Figur 1 und
- Figur 14: einen Ausschnitt der Figur 13.

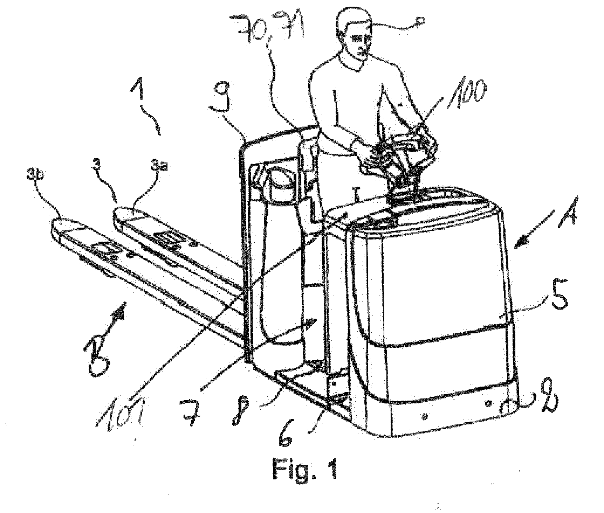

Die Figur 1 zeigt ein erfindungsgemäßes Flurförderzeug 1. Das Flurförderzeug 1 ist im dargestellten Ausführungsbeispiel als Kommissionierer oder Hubwagen ausgebildet.

Das Flurförderzeug 1 weist einen Antriebsteil A und einen relativ zum Antriebsteil A anhebbaren bzw. absenkbaren Lastteil B auf. Der Antriebsteil A weist als tragendes Bauteil einen Rahmen 2 auf. Der Lastteil B weist als tragendes Bauteil einen von zwei Lastgabeln 3a, 3b gebildeten Lastrahmen 3 auf. Die beiden Lastgabeln 3a, 3b sind in Fahrzeugquerrichtung voneinander beabstandet und mittels eines Hubantriebs relativ zu dem Antriebsteil A anhebbar und absenkbar.

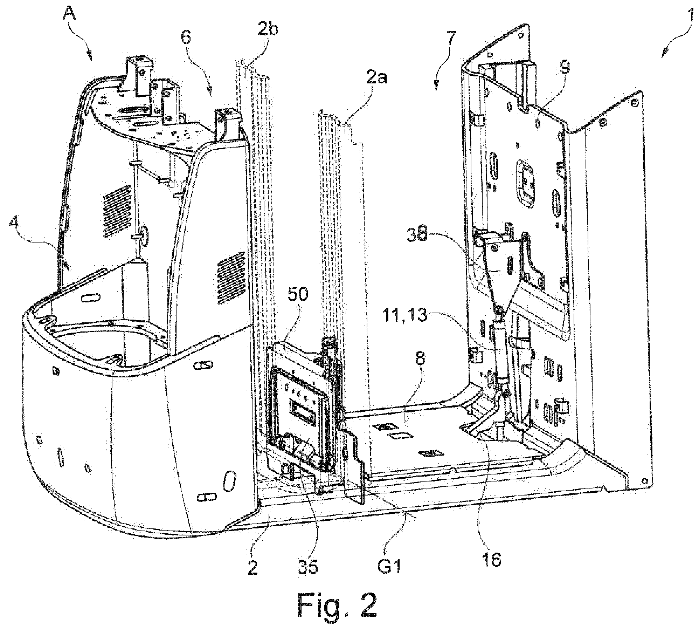

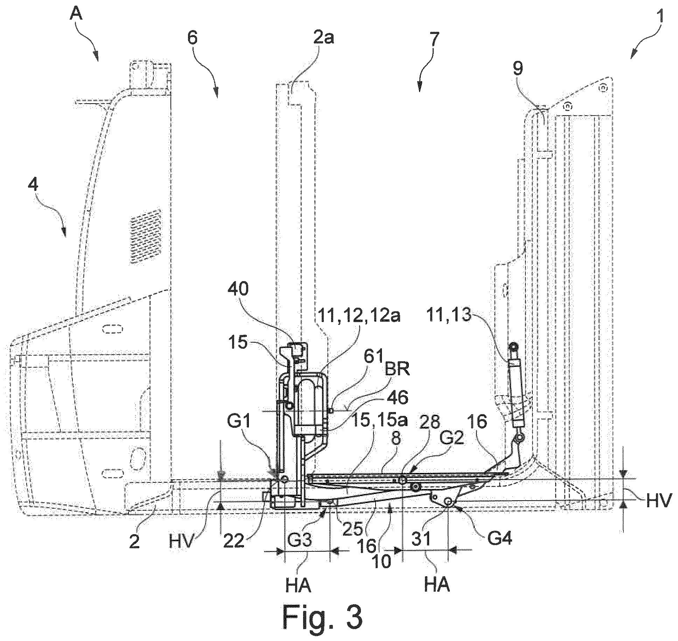

In den Figuren 2 und 3 ist der Antriebsteil A des erfindungsgemäßen Flurförderzeugs 1 näher dargestellt.

An dem vorderen Bereich des Antriebsteils A ist unter einer Haube 5 ein Aggregateraum 4 ausgebildet, in dem ein elektrisch angetriebenes und lenkbares Antriebsrad angeordnet ist, mit dem sich der Antriebsteil A auf einer Fahrbahn abstützt. Unter der Haube 5 sind in dem Aggregateraum weitere Aggregate angeordnet, beispielsweise eine Leistungselektronikeinheit und ein elektrischer Hubmotor zum Antrieb einer Hydraulikpumpe, mittels der eine Hubvorrichtung zum Anheben und Absenken des Lastrahmens 3 relativ zum Rahmen 2 versorgbar ist.

In Längsrichtung des Flurförderzeugs 1 benachbart zum Aggregateraum 4 ist am Antriebsteil A ein Batteriefach 6 zur Aufnahme einer Traktionsbatterie ausgebildet, der ein elektrisches Antriebssystem des Flurförderzeugs 1 mit elektrischer Energie versorgt.

In Längsrichtung des Flurförderzeugs 1 benachbart zum Batteriefach 6 ist am Antriebsteil A ein Fahrerarbeitsplatz 7 ausgebildet, der von einer Fahrerstandplattform 8 für eine stehende Bedienperson P ausgebildet ist, auf der die Bedienperson P steht.

Am hinteren Bereich des Antriebsteil A ist in Längsrichtung des Flurförderzeugs 1 benachbart zu dem Fahrerarbeitsplatz 7 eine vertikale Rückwand 9 angeordnet, an der der anhebbare und absenkbare Lastrahmen 3 vertikal geführt ist. An der vertikalen Rückwand 9 ist weiterhin in vertikaler Richtung oberhalb der Fahrerstandplattform 8 eine Fahrerarbeitsplatzkomponente 70 in vertikaler Richtung bewegbar am Antriebsteil A aufgehängt. Die Fahrerarbeitsplatzkomponente 70 ist im dargestellten Ausführungsbeispiel als Rückenlehne 71 ausgebildet.

An dem Antriebsteil A des Flurförderzeugs 1 ist somit der von der Fahrerstandplattform 8 gebildete Fahrerarbeitsplatz 7 in Längsrichtung des Flurförderzeugs 1 zwischen dem Batteriefach 6 der Traktionsbatterie und der vertikalen Rückwand 9 des Antriebsteils A angeordnet.

Die Fahrerstandplattform 8 ist als gefederte und gedämpfte Fahrerstandplattform 8 ausgebildet, deren Aufbau in Verbindung mit den Figuren 2 bis 8 näher beschrieben wird.

Die Fahrerstandplattform 8 ist mittels einer Aufhängung 10 an dem Antriebsteil A in vertikaler Richtung V bewegbar aufgehängt. Weiterhin ist die Fahrerstandplattform 8 mittels einer Feder-Dämpfereinrichtung 11, die mindestens ein Federelement 12 und ein Dämpferelement 13 umfasst, an dem Antriebsteil A gefedert und gedämpft abgestützt.

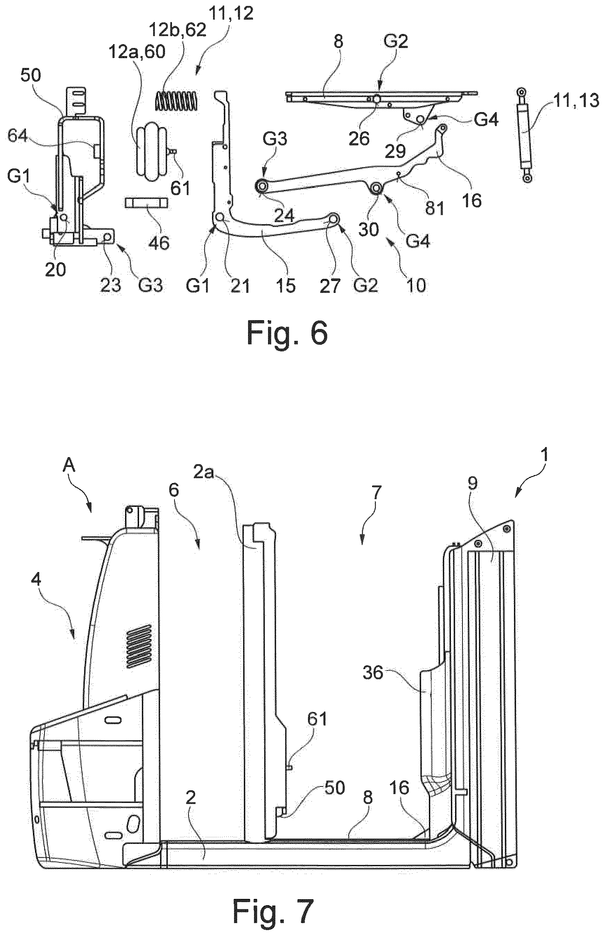

Die Aufhängung 10 ist im dargestellten Ausführungsbeispiel als Parallelogrammaufhängung 10 ausgebildet, die - wie in der Figur 6 näher dargestellt ist - einen ersten Lenker 15 aufweist, der an einer ersten Gelenkverbindung G1 an dem Antriebsteil A und an einer zweiten Gelenkverbindung G2 an der Fahrerstandplattform 8 gelenkig angelenkt ist, und einen zweiten Lenker 16 aufweist, der an einer dritten Gelenkverbindung G3 an dem Antriebsteil A und an einer vierten Gelenkverbindung G4 an der Fahrerstandplattform 8 gelenkig angelenkt ist. Die erste Gelenkverbindung G1 und die dritte Gelenkverbindung G3 sind an dem Antriebsteil A - wie in der Figur 3 näher verdeutlicht ist - um einen horizontalen Abstand HA und einen vertikalen Abstand HV voneinander beabstandet angeordnet. Die zweite Gelenkverbindung G2 und die vierte Gelenkverbindung G4 an der Fahrerstandplattform 8 weisen im Wesentlichen denselben horizontalen Abstand HA und im Wesentlichen denselben vertikalen Abstand HV voneinander auf. Der horizontale Abstand HA an den Gelenkverbindungen G1 und G3 kann hierbei gleich dem horizontalen Abstand HA an den Gelenkverbindungen G2 und G4 sein sowie der vertikale Abstand HV an den Gelenkverbindungen G1 und G3 kann hierbei gleich dem vertikalen Abstand HV an den Gelenkverbindungen G2 und G4 sein, so dass eine reine vertikale Bewegung der Fahrerstandplattform 8 erzielt wird. Es versteht sich jedoch, dass der horizontale Abstand HA an den Gelenkverbindungen G1 und G3 auch unterschiedlich dem horizontalen Abstand HA an den Gelenkverbindungen G2 und G4 sein kann sowie der vertikale Abstand HV an den Gelenkverbindungen G1 und G3 unterschiedlich dem vertikalen Abstand HV an den Gelenkverbindungen G2 und G4 sein kann, so dass eine vertikale Bewegung der Fahrerstandplattform 8 mit einer leichten Rotation der Fahrerstandplattform 8 (Roto-Translation) erzielt wird.

Die Gelenkverbindungen G1-G4 weisen jeweils ein in Fahrzeugquerrichtung verlaufende Drehachse auf. Die erste Gelenkverbindung G1 ist von einer Bohrung 20 am Antriebsteil A und einer Bohrung 21 in dem ersten Lenker 15 gebildet, durch die ein Bolzen 22 geführt ist. Die dritte Gelenkverbindung G3 ist von einer Bohrung 23 am Antriebsteil A und einer Bohrung 24 in dem zweiten Lenker 16 gebildet, durch die ein Bolzen 25 geführt ist. Die zweite Gelenkverbindung G2 ist von einer Bohrung 26 an der Fahrerstandplattform 8 und einer Bohrung 27 in dem ersten Lenker 15 gebildet, durch die ein Bolzen 28 geführt ist. Die vierte Gelenkverbindung G4 ist von einer Bohrung 29 an der Fahrerstandplattform 8 und einer Bohrung 30 in dem zweiten Lenker 16 gebildet, durch die ein Bolzen 31 geführt ist.

Die zweite Gelenkverbindung G2 und die vierte Gelenkverbindung G4 sind hierbei an der Unterseite der Fahrerstandplattform 8 angeordnet, wie aus den Figuren 3, 5 und 6 ersichtlich ist.

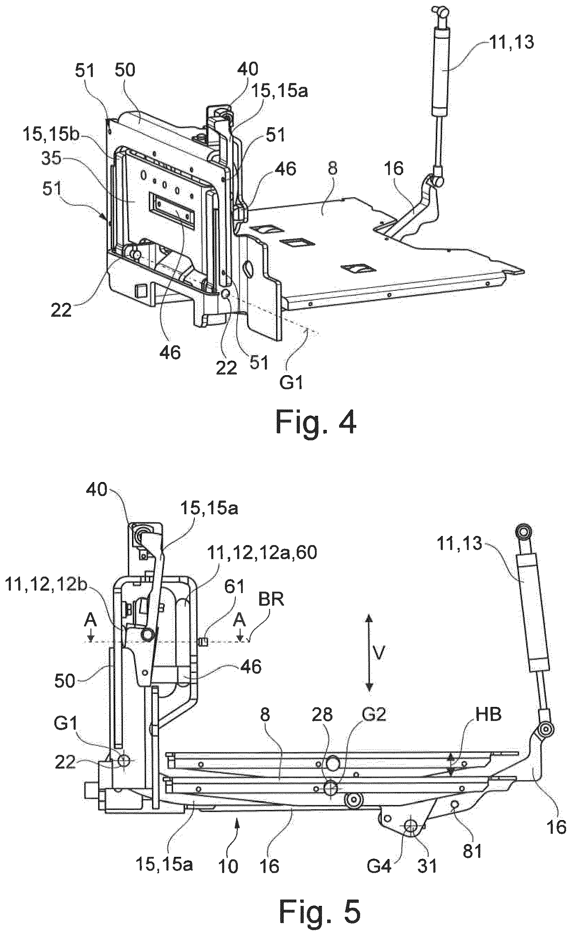

Das mindestens eine Federelement 12 der Feder-Dämpfereinrichtung 11 ist - wie die Figuren 3 und 5 zeigen - in vertikaler Richtung V oberhalb der Fahrerstandplattform 8 angeordnet und weist eine horizontale, in Fahrzeuglängsrichtung ausgerichtete Betätigungsrichtung BR auf. Das mindestens eine Federelement 12 ist hierbei angrenzend an das Batteriefach 6 angeordnet. Das mindestens eine Federelement 12 ist weiterhin in vertikaler Richtung V mit Abstand oberhalb der Fahrerstandplattform 8 angeordnet. Das mindestens eine Federelement 12 ist somit an der Vorderseite der Fahrerstandplattform 8 angeordnet und weist eine horizontale, in Fahrzeuglängsrichtung ausgerichtete Betätigungsrichtung BR auf. Diese Anordnung des mindestens einen Federelements 12 der Feder-Dämpfereinrichtung 11 führt - wie in den Figuren 3, 5 und 7 ersichtlich ist - dazu, dass das mindestens eine Federelement 12 zu keiner Verringerung des Raumes für die Füße der Bedienperson P führt, mit denen die Bedienperson auf der Fahrerstandplattform 8 steht.

Das mindestens eine Federelement 12 ist von einem der beiden Lenker 15, 16, im dargestellten Ausführungsbeispiel dem ersten Lenker 15, betätigbar, der hierzu als Winkelhebel ausgebildet ist. Der Lenker 15 weist einen im Wesentlichen horizontal ausgerichteten Abschnitt auf, an dem die Gelenkverbindung G2 ausgebildet ist und einen im Wesentlichen vertikal ausgerichteten Abschnitt auf, der mit dem mindestens einen Federelement 12 zu dessen Betätigung in Wirkverbindung steht.

Der erste Lenker 15 ist im dargestellten Ausführungsbeispiel von zwei in Fahrzeugquerrichtung beabstandet angeordneten Lenkerelementen 15a, 15b gebildet, die mit einer Querplatte 35 verbunden sind, mittels der das mindestens eine Federelement 12 betätigbar ist, wie aus der Figur 4 ersichtlich ist.

Der zweite Lenker 16 ist - in Fahrzeugquerrichtung gesehen - zwischen den beiden Lenkerelementen 15a, 15b angeordnet. Dies ermöglicht es, den Lenker 16 und die horizontalen Abschnitte der Lenkerelemente 15a, 15b derart anzuordnen, dass der Lenker 16 und die horizontalen Abschnitte der Lenkerelemente 15a, 15b in vertikaler Richtung teilweise denselben Einbauraum nutzen, so dass die Lenker 15, 16 in vertikaler Richtung einen geringen Einbauraum unter der Fahrerstandplattform 8 aufweisen.

Das Dämpferelement 13 der Feder-Dämpfereinrichtung 11 ist mit einem der beiden Lenker 15, 16, im dargestellten Ausführungsbeispiel dem zweiten Lenker 16, verbunden. Alternativ kann das Dämpferelement 13 der Feder-Dämpfereinrichtung 11 mit der Fahrerstandplattform 8 verbunden sein.

Das Dämpferelement 13 ist an der Fahrerstandplattform 8 in Fahrzeuglängsrichtung gegenüberliegend zu dem mindestens einen Federelement 12 angeordnet. Das Dämpferelement 13 ist angrenzend an die vertikale Rückwand 9 des Antriebsteils A angeordnet und an der vertikalen Rückwand 9 des Antriebsteils A befestigt.

Der Lenker 16 ist für die Verbindung mit dem Dämpferelement 13 über die vierte Gelenkverbindung G4 hinaus verlängert. Die vertikale Rückwand 9 ist zur Befestigung des Dämpferelements 13 mit einer Befestigungskonsole 38 versehen (Figur 2). Das Dämpferelement 13 kann hierdurch vollständig unter einer Abdeckung 36 (Figur 7) angeordnet werden, die an der Rückwand 9 befestigt ist.

Das Dämpferelement 13 befindet sich somit in Fahrzeuglängsrichtung gesehen an der Rückseite der Fahrerstandplattform 8, wodurch die Anordnung des Dämpferelements 13 der Feder-Dämpfereinrichtung 11 nur zu geringen Beschränkungen des Fahrerraumes auf der Fahrerstandplattform 8 führt.

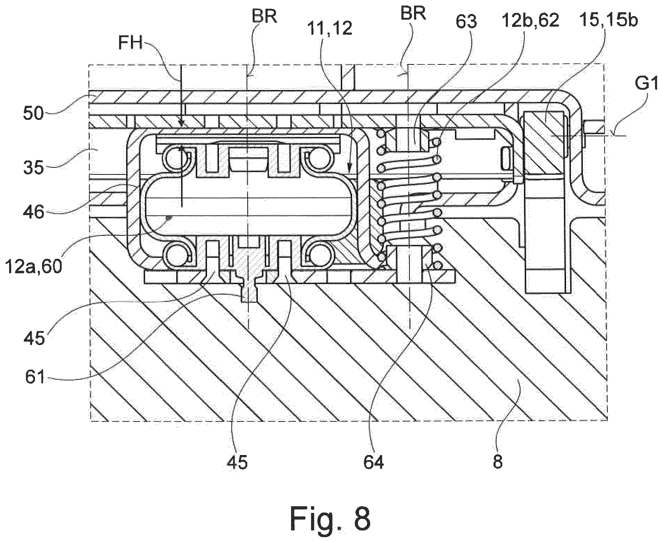

Bei der im Ausführungsbeispiel dargestellten Fahrerstandplattform 8 weist das Feder-Dämpferelement zwei Federelemente 12a, 12b auf, die - wie aus den Figuren 6 und 8 ersichtlich ist - parallel wirkend angeordnet sind.

Weiterhin ist ein Anwesenheitssensor 40 vorgesehen, der eine auf der Fahrerstandplattform 8 befindliche Bedienperson P erfasst. Der Anwesenheitssensor 40 ist von der Aufhängung 10 betätigbar, im dargestellten Ausführungsbeispiel von dem ersten Lenker 15 der Aufhängung 10.

Die Figur 8 zeigt einen horizontalen Schnitt durch die Federelemente 12a, 12b in einem Ausgangszustand bei unbelasteter Fahrerstandplattform 8.

Im Ausgangszustand bei unbelasteter Fahrerstandplattform 8 steht der die Federelemente 12a, 12b betätigende Lenker 15 mittels der Querplatte 35 nur mit dem zweiten Federelement 12b in Wirkverbindung und zwischen der Querplatte 35 und dem ersten Federelement 12a ist ein Freihubbereich FH ausgebildet, in dem das erste Federelement 12a nicht betätigt wird.

Das erste Federelement 12a ist hierzu an dem Antriebsteil A befestigt, beispielsweise mittels Befestigungsschrauben 45, und das erste Federelement 12a steht mit einer Begrenzungseinrichtung 46 in Wirkverbindung, die die Entspannung des ersten Federelements 12a derart begrenzt, dass im Ausgangszustand zwischen dem ersten Federelement 12a und der Querplatte 35 ein Luftspalt vorhanden ist, der den Freihubbereich FH bildet. Die Begrenzungseinrichtung 46 ist im dargestellten Ausführungsbeispiel - wie aus der Figur 8 ersichtlich ist - als bügelförmiger Halter ausgebildet, der an dem Antriebsteil A befestigt ist und der das erste Federelement 12a in Draufsicht umgreift. Im Ausgangszustand liegt das erste Federelement 12a an dem bügelförmigen Halter an, so dass der bügelförmige Halter die Entspannung des ersten Federelements 12a begrenzt.

Das zweite Federelement 12b ist - wie aus der Figur 8 ersichtlich ist - im Ausgangszustand zwischen dem Antriebsteil A und der Querplatte 35 eingespannt.

Der Anwesenheitssensor 40 wird hierbei von dem ersten Lenker 15 bei dessen Bewegung in dem Freihubbereich FH betätigt.

Im dargestellten Ausführungsbeispiel ist ein Trägerbauteil 50 vorgesehen, an dem die erste Gelenkverbindung G1 und die dritte Gelenkverbindung G3 ausgebildet sind und an dem die beiden Federelemente 12a, 12b sowie die Begrenzungseinrichtung 46 angeordnet und befestigt sind. An dem Trägerbauteil 50 ist weiterhin der Anwesenheitssensor 40 angeordnet und befestigt. Das Trägerbauteil 50 weist eine Befestigungsschnittstelle 51 auf, mittels der das Trägerbauteil 50 an dem Antriebsteil A befestigbar ist. Im dargestellten Ausführungsbeispiel ist das Trägerbauteil 50 - wie aus der Figur 2 ersichtlich ist - mit der Befestigungsschnittstelle 51 an zwei vertikal angeordneten Säulen 2a, 2b des Rahmens 2 befestigt, die voneinander in Fahrzeugquerrichtung beabstandet sind und in Fahrzeuglängsrichtung zwischen dem Batteriefach 6 und dem Fahrerarbeitsplatz 7 angeordnet sind. Im dargestellten Ausführungsbeispiel ist die Befestigungsschnittstelle 51 von mehreren Bohrungen für Schraubverbindungen gebildet, mit denen das Trägerbauteil 50 an den Säulen 2a, 2b befestigt werden kann, wie aus den Figuren 2 und 4 ersichtlich ist.

Im dargestellten Ausführungsbeispiel ist das erste Federelement 12a als Luftfeder 60, beispielsweise Luftbalgfeder, ausgebildet.

Das erste Federelement 12a kann weiterhin zur Anpassung an das Körpergewicht der Bedienperson in der Federsteifigkeit einstellbar sein. Die Luftfeder 60 ist hierzu mit einem Anschluss 61 versehen, der eine Veränderung des Luftdruckes im Inneren der Luftfeder 60 ermöglicht.

Das zweite Federelement 12b ist im dargestellten Ausführungsbeispiel als Spiraldruckfeder 62 ausgebildet ist. Die Spiraldruckfeder 62 ist auf einem Zapfen 64 des Trägerbauteils 50 und einem Zapfen 63 der Querplatte 35 angeordnet.

Das Dämpferelement 13 ist im dargestellten Ausführungsbeispiel als hydraulischer Dämpfer ausgebildet.

Die als Rückenlehne 71 ausgebildete Fahrerarbeitsplatzkomponente 70 ist mittels einer in den Figuren nicht näher dargestellten Führung, beispielsweise einer Linearführung, an der vertikalen Rückwand 9 in vertikaler Richtung V bewegbar angeordnet.

Die Parallelogrammaufhängung 10 der Fahrerstandplattform 8 mit den Lenkern 15, 16 ermöglicht - wie in der Figur 5 veranschaulicht ist, in der die Fahrerstandplattform 8 in der oberen Endstellung und in der unteren Endstellung dargestellt ist - eine reine vertikale Bewegung bzw. im Wesentlichen vertikale der Fahrerstandplattform 8 über den gesamten Hubbereich HB, wobei die Fahrerstandplattform 8 über den gesamten Hubbereich HB stets im Wesentlichen horizontal ausgerichtet ist, was zu einem hohen Komfort für die auf der Fahrerstandplattform 8 stehende Bedienperson P führt.

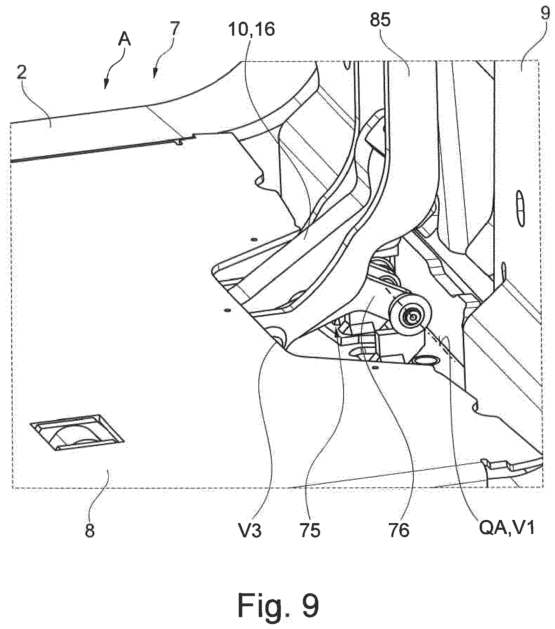

Erfindungsgemäß ist - wie in den Figuren 9-13 näher dargestellt ist - ein Koppelgetriebe 75 vorgesehen ist, das die Fahrerarbeitsplatzkomponente 70 mit der Aufhängung 10 der Fahrerstandplattform 8 derart verbindet, dass die Vertikalbewegung der Fahrerstandplattform 8 und die Vertikalbewegung der Fahrerarbeitsplatzkomponente 70 gekoppelt ist.

Das Koppelgetriebe 75 umfasst einen Hebel 76, der an einem ersten Verbindungspunkt V1 an dem Antriebsteil A um eine horizontale, in Fahrzeugquerrichtung verlaufende Querachse QA schwenkbar gelagert ist und an einem zweiten Verbindungspunkt V2 mit der Aufhängung 10 gelenkig verbunden ist. Die Querachse QA ist an dem Rahmen 2 benachbart zu der vertikalen Rückwand 9 angeordnet.

Im dargestellten Ausführungsbeispiel ist der Hebel 76 des Koppelgetriebes 75 mit einem der beiden Lenker 15, 16, bevorzugt dem zweiten Lenker 16, der Parallelogrammaufhängung an dem zweiten Verbindungspunkt V2 gelenkig verbunden. Der zweite Verbindungspunkt V2 ist von einer Bohrung 80 im Hebel 76 und einer Bohrung 81 in dem zweiten Lenker 16 (Figuren 5 und 6) der Aufhängung 10 gebildet, durch die ein Bolzen 82 geführt ist.

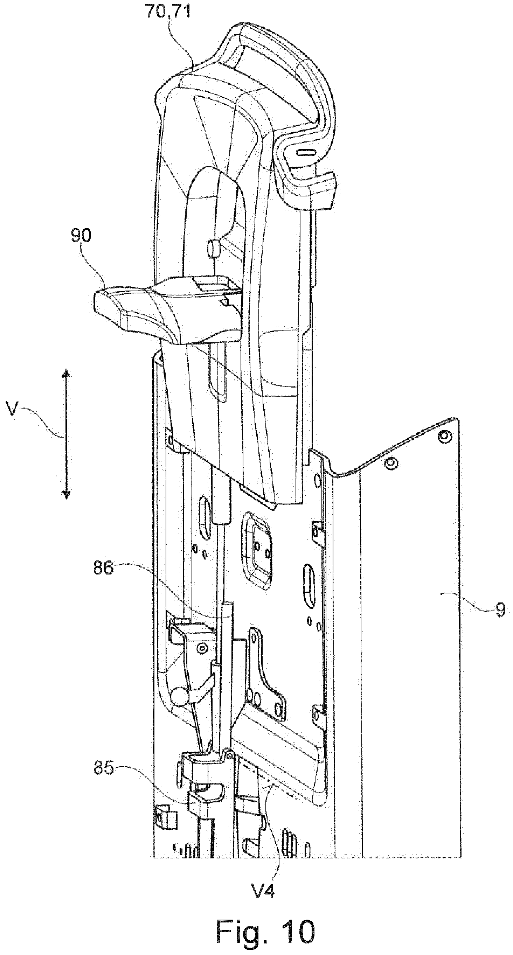

Das Koppelgetriebe 75 umfasst weiterhin eine mit der Fahrerarbeitsplatzkomponente 70 in Verbindung stehende Verbindungsstange 85, die an einem dritten Verbindungspunkt V3 mit dem Hebel 76 gelenkig verbunden ist. Die Verbindungsstange 85 ist in vertikaler Richtung entlang der vertikalen Rückwand 9 nach oben geführt und an einem Verbindungspunkt V4 (Figur 10) mit der Fahrerarbeitsplatzkomponente 70 verbunden.

Der dritte Verbindungspunkt V3 ist zwischen der Querachse QA und dem zweiten Verbindungpunkt V2 angeordnet und angrenzend an den zweiten Verbindungpunkt V2 angeordnet.

Das Koppelgetriebe 75 ist derart ausgebildet, dass die Fahrerarbeitsplatzkomponente 70 und die Fahrerstandplattform 8 synchronisiert sind, d.h. die Fahrerarbeitsplatzkomponente 70 und die Fahrerstandplattform 8 weisen eine Vertikalbewegung mit derselben Verschiebung und derselben Geschwindigkeit auf.

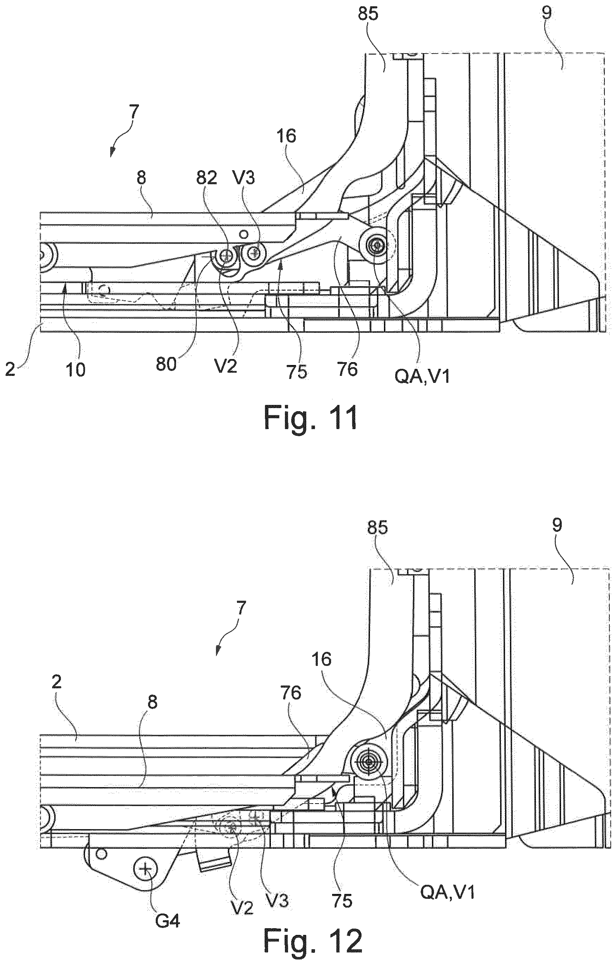

In der Figur 11 ist die Fahrerstandplattform 8 und die Verbindungsstange 85 in der oberen Endlage der Fahrerstandplattform 8 dargestellt. Die Figur 12 zeigt die Fahrerstandplattform 8 und die Verbindungsstange 85 in der unteren Endlage der Fahrerstandplattform 8. Bei der Vertikalbewegung der Fahrerstandplattform nach unten, wird der an dem Verbindungspunkt V2 mit dem Lenker 16 verbundene Hebel 76 um die Querachse QA verschwenkt, so dass die an dem Verbindungspunkt V3 mit dem Hebel 76 verbundene Verbindungsstange 85 ebenfalls nach unten betätigt wird, wobei die Fahrerstandplattform 8 und die Betätigungsstange 85 und somit die Fahrerarbeitsplatzkomponente 70 dieselbe vertikale Verschiebung und Geschwindigkeit aufweisen.

Die Verbindungsstange 85 ist im Bereich der Verbindung mit der Fahrerarbeitsplatzkomponente 70 - wie aus der Figur 10 näher ersichtlich ist - an einer vertikalen Linearführung 86, beispielsweise einer Führungsstange, geführt, die an der vertikalen Rückwand 9 angeordnet ist.

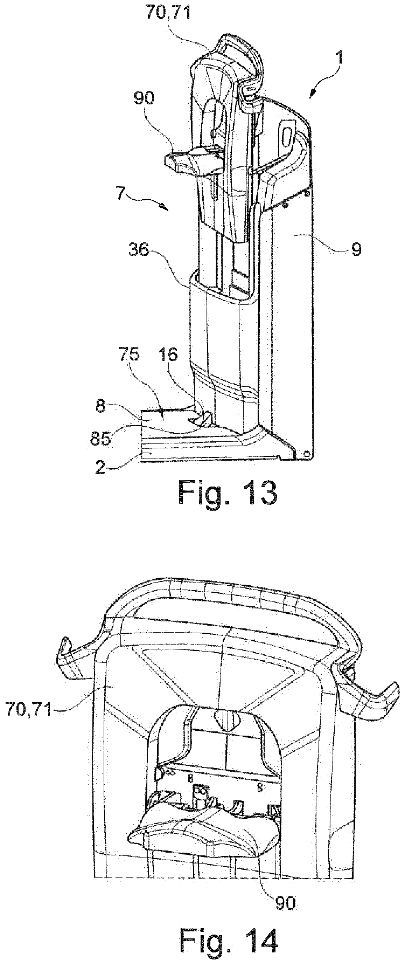

Die Verbindungsstange 85 kann mit dem entlang der vertikalen Rückwand 9 nach oben geführten Abschnitt vollständig unterhalb der Abdeckung 36 (Figur 13) angeordnet werden, die an der Rückwand 9 befestigt ist.

Die Fahrerarbeitsplatzkomponente 70 ist somit in vertikaler Richtung V verstellbar an der Rückwand 9 angeordnet, wobei die Vertikalbewegung der Fahrerarbeitsplatzkomponente 70 über die Verbindungsstange 85 mit der Vertikalbewegung der Fahrerstandplattform 8 gekoppelt ist. Die Linearführung 86 hält die Verbindungsstange 85 in Position und ermöglicht, dass nur vertikale Kräfte zwischen der Fahrerarbeitsplatzkomponente 70 und der Verbindungsstange 85 übertragen werden.

Die als Rückenlehne 71 ausgebildete Fahrerarbeitsplatzkomponente 70 ist weiterhin mit einem Fahrersitz 90 versehen, der im dargestellten Ausführungsbeispiel als Klappsitz ausgebildet ist. In den Figuren 10, 13 und 14 ist der Klappsitz in der ausgeklappten Stellung dargestellt. Der Klappsitz kann um eine Querachse geklappt und in eine Ausnehmung der Rückenlehne 71 eingeklappt werden (Figur 14).

Der Fahrersitz 90 kann weiterhin an der Rückenlehne 70 in vertikaler Richtung V höhenverstellbar angeordnet sein.

Die Erfindung weist eine Reihe von Vorteilen auf.

Mit der Aufhängung 10 in Verbindung mit der Feder-Dämpfereinrichtung 11 können die Vibrationen und Schwingungen reduziert werden, die auf die auf der Fahrerstandplattform 8 stehende Bedienperson P einwirken, beispielswiese im Betrieb des Flurförderzeugs 1 auf unebenen Fahrbahnoberflächen. Sofern sich die auf der Fahrerstandplattform 8 stehende Bedienperson P an der Rückenlehne 71 anlehnt oder auf dem Fahrersitz 90 sitzt, kann mit dem Koppelgetriebe 75 eine Federung und Dämpfung der Rückenlehne 71 bzw. des Fahrersitzes 90 durch die Feder-Dämpfereinrichtung 11 der Fahrerstandplattform 8 erzielt werden, um die Vibrationen und Schwingungen zu reduzieren, die auf die sich an der Rückenlehne 71 anlehnenden oder auf dem Fahrersitz 90 sitzende Bedienperson P einwirken.

Bei dem erfindungsgemäßen Koppelgetriebe 75 ist die Verbindungsstange 85 mit der Fahrerarbeitsplatzkomponete 70 verbunden und der Hebel 76 verbindet die Verbindungsstange 85 mit dem Lenker 16 der Aufhängung 10. Der Hebel 76 stellt somit ein Verbindungselement zwischen der Verbindungsstange 85 und dem Lenker 16 der Aufhängung 10 dar. Mit dem Koppelgetriebe 75 wird eine gelenkige Verbindung der Fahrerstandplattform 8 mit der Fahrerarbeitsplatzkomponente 70 erzielt. Durch entsprechende konstruktive Ausführung des Hebels 76 kann eine Synchronisierung der Fahrerstandplattform 8 mit der Fahrerarbeitsplatzkomponente 70 erzielt werden, so dass die Fahrerarbeitsplatzkomponente 70 und die Fahrerstandplattform 8 eine Vertikalbewegung mit derselben Verschiebung und derselben Geschwindigkeit aufweisen, obwohl die Fahrerarbeitsplatzkomponente 70 nicht direkt mit der Fahrerstandplattform 8 verbunden ist.

Die Kräfte, die von der Fahrerarbeitsplatzkomponente 70 kommen, beispielsweise die Gewichtskraft der auf dem Fahrersitz 90 sitzenden Bedienperson P und dynamische Kräfte, werden nicht auf die Fahrerstandplattform 8 übertragen, sondern von dem Koppelgetriebe 75 aufgenommen und über den Hebel 76 und den Lenker 16 im Antriebsteil A abgestützt. Es besteht somit keine Gefahr von Beschädigung der Fahrerstandplattform 8 und/oder der Gefahr des Blockierens der Bauteile der gefederten und gedämpften Aufhängung 10 der Fahrerstandplattform 8.

Das Koppelgetriebe 75 weist einen geringen Bauraumbedarf auf und führt in dem Fahrerarbeitsplatz 7 nur zu geringen Beeinträchtigungen des Platzes für die Bedienperson P.

Durch das Koppelgetriebe 75 und die Verbindung der mit dem Fahrersitz 90 versehenen Rückenlehne 71 mit der Fahrerstandplattform 8 kann mit dem Anwesenheitssensor 40 auch erfasst werden, wenn die Bedienperson P auf dem Fahrersitz 90 sitzt. Es ist kein zweiter Anwesenheitssensor an dem Fahrersitz 90 erforderlich.

Die Erfindung ist nicht auf das dargestellte Ausführungsbeispiel beschränkt. Es versteht sich, dass mit dem beschriebenen Koppelgetriebe 75 auch eine Abdeckung 101, an der ein von der Bedienperson P betätigbarer Bedienlenker 100 angeordnet ist, mit der Fahrerstandplattform 8 gekoppelt werden kann, ohne die Abdeckung 101 direkt mit der Fahrerstandplattform 8 zu verbinden.

Durch entsprechende Wahl und Anordnung der Verbindungspunkte V2, V3 an dem Hebel 75 ist es auch möglich, die relative Geschwindigkeit zwischen der Fahrerstandplattform 8 und der Fahrerarbeitsplatzkomponente 70 zu verändern, beispielsweise derart, dass die Geschwindigkeit der Fahrerarbeitsplatzkomponente 70 um 10% höher als die Geschwindigkeit der Fahrerstandplattform 8 ist, was bei einer direkten Befestigung der Fahrerarbeitsplatzkomponente 70 an der Fahrerstandplattform 8 unmöglich ist.

## Patentansprüche

1. Flurförderzeug (1) mit einem Fahrerarbeitsplatz (7), der von einer Fahrerstandplattform (8) für eine stehende Bedienperson (P) gebildet ist und an einem Antriebsteil (A) des Flurförderzeugs (1) in Längsrichtung des Flurförderzeugs (1) zwischen einem Batteriefach (6) einer Traktionsbatterie und einer vertikalen Rückwand (9) des Antriebsteils (A) angeordnet ist, wobei die Fahrerstandplattform (8) mittels einer Aufhängung (10) an dem Antriebsteil (A) in vertikaler Richtung bewegbar aufgehängt ist und mittels einer Feder-Dämpfereinrichtung (11) an dem Antriebsteil (A) gefedert und gedämpft abgestützt ist, wobei oberhalb der Fahrerstandplattform (8) eine Fahrerarbeitsplatzkomponente (70) in vertikaler Richtung bewegbar an dem Antriebsteil (A) aufgehängt ist, wobei ein Koppelgetriebe (75) vorgesehen ist, das die Fahrerarbeitsplatzkomponente (70) mit der Aufhängung (10) der Fahrerstandplattform (8) derart verbindet, dass die Vertikalbewegung der Fahrerstandplattform (8) und die Vertikalbewegung der Fahrerarbeitsplatzkomponente (70) gekoppelt ist, **dadurch gekennzeichnet, dass** das Koppelgetriebe (75) einen Hebel (76) umfasst, der an einem ersten Verbindungspunkt (V1) an dem Antriebsteil (A) um eine Querachse (QA) schwenkbar gelagert ist und an einem zweiten Verbindungspunkt (V2) mit der Aufhängung (10) gelenkig verbunden ist, und eine mit der Fahrerarbeitsplatzkomponente (70) in Verbindung stehende Verbindungsstange (85) umfasst, die an einem dritten Verbindungspunkt (V3) mit dem Hebel (76) gelenkig verbunden ist.

2. Flurförderzeug nach Anspruch 1, **dadurch gekennzeichnet, dass** die Aufhängung (10) der Fahrerstandplattform (8) als Parallelogrammaufhängung ausgebildet ist, die einen ersten Lenker (15) aufweist, der an einer ersten Gelenkverbindung (G1) mit dem Antriebsteil (A) und an einer zweiten Gelenkverbindung (G2) mit der Fahrerstandplattform (8) gelenkig verbunden ist, und einen zweiten Lenker (16) aufweist, der an einer dritten Gelenkverbindung (G3) mit dem Antriebsteil (A) und an einer vierten Gelenkverbindung (G4) mit der Fahrerstandplattform (8) gelenkig verbunden ist, wobei die erste Gelenkverbindung (G1) und die dritte Gelenkverbindung (G3) an dem Antriebsteil (A) um einen horizontalen Abstand (HA) und einen vertikalen Abstand (HV) voneinander beabstandet angeordnet sind und wobei die zweite Gelenkverbindung (G2) und die vierte Gelenkverbindung G4 an der Fahrerstandplattform (8) um im Wesentlichen denselben horizontalen Anstand (HA) und im Wesentlichen denselben vertikalen Abstand (HV) voneinander beabstandet angeordnet sind.

3. Flurförderzeug nach Anspruch 2, **dadurch gekennzeichnet, dass** der Hebel (76) des Koppelgetriebes (75) mit einem der beiden Lenker (15; 16), insbesondere mit dem zweiten Lenker (16), der Parallelogrammaufhängung gelenkig verbunden ist.

4. Flurförderzeug nach einem der Ansprüche 1 bis 3, **dadurch gekennzeichnet, dass** das Koppelgetriebe (75) derart ausgebildet ist, dass die Fahrerarbeitsplatzkomponente (70) und die Fahrerstandplattform (8) synchronisiert sind.

5. Flurförderzeug nach einem der Ansprüche 1 bis 4, **dadurch gekennzeichnet, dass** der dritte Verbindungspunkt (V3) zwischen der Querachse (QA) und dem zweiten Verbindungspunkt (V2) angeordnet ist.

6. Flurförderzeug nach einem der Ansprüche 1 bis 5, **dadurch gekennzeichnet, dass** die Verbindungsstange (85) im Bereich der Verbindung mit der Fahrerarbeitsplatzkomponente (70) an einer vertikalen Linearführung (86) geführt ist.

7. Flurförderzeug nach einem der Ansprüche 1 bis 6, **dadurch gekennzeichnet, dass** die Fahrerarbeitsplatzkomponente (70) als Abdeckung (101), insbesondere als Abdeckung des Batteriefachs (6), ausgebildet ist, an der ein Bedienlenker (100) des Flurförderzeugs (1) angeordnet ist.

8. Flurförderzeug nach einem der Ansprüche 1 bis 6, **dadurch gekennzeichnet, dass** die Fahrerarbeitsplatzkomponente (70) als Rückenlehne (71) ausgebildet ist, die an der vertikalen Rückwand (9) des Antriebsteils (A) vertikal bewegbar angeordnet ist.

9. Flurförderzeug nach Anspruch 8, **dadurch gekennzeichnet, dass** die Rückenlehne (71) mit einem Fahrersitz (90), insbesondere einem Klappsitz, versehen ist.

10. Flurförderzeug nach Anspruch 9, **dadurch gekennzeichnet, dass** der Fahrersitz (90) an der Rückenlehne (70) in vertikaler Richtung höhenverstellbar angeordnet ist.

11. Flurförderzeug nach einem der Ansprüche 1 bis 10, **dadurch gekennzeichnet, dass** ein Anwesenheitssensor (40) vorgesehen ist, der eine auf der Fahrerstandplattform (8) befindliche Bedienperson (P) erfasst, wobei der Anwesenheitssensor (40) von der Aufhängung (10) der Fahrerstandplattform (8) betätigt ist.

## Claims

1. Industrial truck (1) having a driver's work station (7) which is formed by a driver's platform (8) for a standing operator (P) and is arranged on a drive part (A) of the industrial truck (1) in the longitudinal direction of the industrial truck (1) between a battery compartment (6) for a traction battery and a vertical rear wall (9) of the drive part (A), wherein the driver's platform (8) is suspended on the drive part (A) so as to be movable in a vertical direction by means of a suspension (10) and is supported on the drive part (A) in a sprung and damped manner by means of a spring-damper device (11), wherein a driver's work station component (70) is suspended on the drive part (A) above the driver's platform (8) so as to be movable in the vertical direction, wherein a coupling mechanism (75) is provided which connects the driver's workstation component (70) to the suspension (10) of the driver's platform (8) in such a manner that the vertical movement of the driver's platform (8) and the vertical movement of the driver's workstation component (70) are coupled, **characterized in that** the coupling mechanism (75) comprises a lever (76) which is mounted on the drive part (A) at a first connecting point (V1) so as to be pivotable about a transverse axis (QA) and is connected in an articulated manner to the suspension (10) at a second connecting point (V2), and comprises a connecting rod (85) which is connected to the driver's work station component (70) and is connected in an articulated manner to the lever (76) at a third connecting point (V3).

2. Industrial truck according to Claim 1, **characterized in that** the suspension (10) of the driver's platform (8) is configured in the form of a parallelogram suspension which has a first link (15), which is connected in an articulated manner to the drive part (A) at a first articulated joint (G1) and to the driver's platform (8) at a second articulated joint (G2), and has a second link (16), which is connected in an articulated manner to the drive part (A) at a third articulated joint (G3) and to the driver's platform (8) at a fourth articulated joint (G4), wherein the first articulated joint (G1) and the third articulated joint (G3) are arranged on the drive part (A) in a manner spaced apart from one another by a horizontal distance (HA) and a vertical distance (HV), and wherein the second articulated joint (G2) and the fourth articulated joint (G4) are arranged on the driver's platform (8) in a manner spaced apart from one another by substantially the same horizontal distance (HA) and substantially the same vertical distance (HV).

3. Industrial truck according to Claim 2, **characterized in that** the lever (76) of the coupling mechanism (75) is connected in an articulated manner to one of the two links (15; 16), in particular to the second link (16), of the parallelogram suspension.

4. Industrial truck according to one of Claims 1 to 3, **characterized in that** the coupling mechanism (75) is configured in such a manner that the driver's workstation component (70) and the driver's platform (8) are synchronised.

5. Industrial truck according to one of Claims 1 to 4, **characterized in that** the third connecting point (V3) is arranged between the transverse axis (QA) and the second connecting point (V2).

6. Industrial truck according to one of Claims 1 to 5, **characterized in that** the connecting rod (85) is guided on a vertical linear guide (86) in the region of the connection to the driver's workstation component (70).

7. Industrial truck according to one of Claims 1 to 6, **characterized in that** the driver's workstation component (70) is configured as a covering (101), in particular as a covering of the battery compartment (6), on which an operating steering handle (100) of the industrial truck (1) is arranged.

8. Industrial truck according to one of Claims 1 to 6, **characterized in that** the driver's workstation component (70) is configured as a backrest (71) which is arranged in a vertically movable manner on the vertical rear wall (9) of the drive part (A).

9. Industrial truck according to Claim 8, **characterized in that** the backrest (71) is provided with a driver's seat (90), in particular a folding seat.

10. Industrial truck according to Claim 9, **characterized in that** the driver's seat (90) is arranged to be height-adjustable in the vertical direction at the backrest (70).

11. Industrial truck according to one of Claims 1 to 10, **characterized in that** a presence sensor (40) is provided, which detects an operator (P) located on the driver's platform (8), wherein the presence sensor (40) is actuated by the suspension (10) of the driver's platform (8).

## Revendications

1. Chariot de manutention (1) doté d'un poste de travail de conducteur (7) qui est formé par une plateforme de support de conducteur (8) pour un opérateur debout (P), et est disposée au niveau d'une partie motrice (A) du chariot de manutention (1) dans la direction longitudinale du chariot de manutention (1) entre un compartiment de batterie (6) d'une batterie de traction et un panneau arrière vertical (9) de la partie motrice (A), dans lequel la plateforme de support de conducteur (8) est suspendue à la partie motrice (A) de manière mobile dans la direction verticale, au moyen d'une suspension (10), et prend appui de manière élastique et amortie sur la partie motrice (A), au moyen d'un amortisseur à ressort (11), dans lequel, au-dessus de la plateforme de support de conducteur (8), un composant de poste de travail de conducteur (70) est suspendu à la partie motrice (A) de manière mobile dans la direction verticale, dans lequel un mécanisme de couplage (75) est prévu qui relie le composant de poste de travail de conducteur (70) à la suspension (10) de la plateforme de support de conducteur (8) de telle sorte que le mouvement vertical de la plateforme de support de conducteur (8) et le mouvement vertical du composant de poste de travail de conducteur (70) sont couplés,
**caractérisé en ce que** le mécanisme de couplage (75) comprend un levier (76) qui est monté pivotant autour d'un axe transversal (QA) en un premier point de raccordement (V1) au niveau de la partie motrice (A) et est raccordé de manière articulée à la suspension (10) en un deuxième point de raccordement (V2), et comprend une barre de raccordement (85) en relation avec le composant de poste de travail de conducteur (70) et qui est raccordée de manière articulée au levier (76) en un troisième point de raccordement (V3).

2. Chariot de manutention selon la revendication 1, **caractérisé en ce que** la suspension (10) de la plateforme de support de conducteur (8) est réalisée sous forme de suspension en parallélogramme qui présente une première bielle (15) qui est raccordée de manière articulée à la partie motrice (A) au niveau d'un premier raccordement articulé (G1) et est raccordée à la plateforme de support de conducteur (8) au niveau d'un deuxième raccordement articulé (G2), et présente une deuxième bielle (16) qui est raccordée de manière articulée à la partie motrice (A) au niveau d'un troisième raccordement articulé (G3) et est raccordée à la plateforme de support de conducteur (8) au niveau d'un quatrième raccordement articulé (G4), dans lequel le premier raccordement articulé (G1) et le troisième raccordement articulé (G3) sont disposés au niveau de la partie motrice (A) en étant espacés l'un de l'autre d'une distance horizontale (HA) et d'une distance verticale (HV), et dans lequel 13 deuxième raccordement articulé (G2) et 13 quatrième raccordement articulé (G4) sont disposés au niveau de la plateforme de support de conducteur (8) en étant espacés l'un de l'autre substantiellement de la même distance horizontale (HA) et substantiellement de la même distance verticale (HV).

3. Chariot de manutention selon la revendication 2, **caractérisé en ce que** le levier (76) du mécanisme de couplage (75) est raccordé de manière articulée à l'une des deux bielles (15 ; 16), en particulier à la deuxième bielle (16) de la suspension en parallélogramme.

4. Chariot de manutention selon l'une quelconque des revendications 1 à 3, **caractérisé en ce que** le mécanisme de couplage (75) est réalisé de telle sorte que le composant de poste de travail de conducteur (70) et la plateforme de support de conducteur (8) sont synchronisés.

5. Chariot de manutention selon l'une quelconque des revendications 1 à 4, **caractérisé en ce que** le troisième point de raccordement (V3) est disposé entre l'axe transversal (QA) et le deuxième point de raccordement (V2).

6. Chariot de manutention selon l'une quelconque des revendications 1 à 5, **caractérisé en ce que** dans la zone du raccordement, la barre de raccordement (85) est guidée avec le composant de poste de travail de conducteur (70) sur un guidage linéaire vertical (86).

7. Chariot de manutention selon l'une quelconque des revendications 1 à 6, **caractérisé en ce que** le composant de poste de travail de conducteur (70) est disposé comme un recouvrement (101), en particulier comme un recouvrement du compartiment de batterie (6) sur lequel est disposé un guidon de commande (100) du chariot de manutention (1).

8. Chariot de manutention selon l'une quelconque des revendications 1 à 6, **caractérisé en ce que** le composant de poste de travail de conducteur (70) est réalisé comme un dossier (71) qui est disposé de manière verticalement mobile sur le panneau arrière vertical (9) de la partie motrice (A).

9. Chariot de manutention selon la revendication 8, **caractérisé en ce que** le dossier (71) est muni d'un siège de conducteur (90) en particulier d'un siège rabattable.

10. Chariot de manutention selon la revendication 9, **caractérisé en ce que** le siège de conducteur (90) est disposé sur le dossier (70) de manière réglable en hauteur dans la direction verticale.

11. Chariot de manutention selon l'une quelconque des revendications 1 à 10, **caractérisé en ce qu'**un capteur de présence (40) est prévu qui détecte un opérateur (P) se trouvant sur la plateforme de support de conducteur (8), dans lequel le capteur de présence (40) est actionné par la suspension (10) de la plateforme de support de conducteur (8).
